# EUROPEAN PATENT APPLICATION

(11) **EP 1 953 693 A1**
(43) Date of publication of application: **06.08.2008**
(21) Application number: 08001649.6
(22) Date of filing: 29.01.2008
(51) Int. Cl.: G06Q 30/00, G06Q 40/00

(54) **Method and system for on-line auctioning of money**

(30) Priority: 31.01.2007 TW 96103570
(71) Applicant: Shacom.Com INC., Taipei (TW)
(72) Inventor: Chien, Yung-Sung, Wunshan District, Taipei City (TW)
(74) Representative: Schaeberle, Steffen

(57) **Abstract**

A method for auctioning money. The method includes: creating a transaction pool, where the transaction pool comprises n terms, n participants, and a contribution amount for each term; receiving a first bid from the a first one of the n participants and receiving a second bid from a second one of the n participants for a selected one of the n terms in the transaction pool; determining at least one bid winner of the selected term of the transaction pool based on the first bid and the second bid; distributing a payment amount to the at least one bid winner of the selected term; and creating an auction certificate for one of the non-bid winners of the selected term.

## Description

This application claims priority under 35 U.S.C. § 119 to Taiwan patent application serial number 096103570, incorporated herein by reference.

### FIELD OF THE INVENTION

The method and system disclosed relate to the field of finance, and more specifically, a system for and method of auctioning money over a network.

### BACKGROUND

The process of financing and lending can be grouped into three major categories: collection of capital; allocation of capital; and investment. The earliest form of lending is the direct loan. Direct lending originated with lenders lending small amounts of capital to borrowers who the lender knew directly or through a trusted intermediary. Originally such direct loans were of small amounts and for short terms of time, but as economies developed from agricultural to manufacturing and service, larger quantities needed to be borrowed and for longer terms of time. Thus, professional agencies and intermediaries evolved, such as banks, securities companies, and insurance companies.

The intermediaries collect money from a plurality of individuals and institutions, paying interest on the deposits. The intermediaries then lend the deposits at an interest rate greater than they are paying on the deposits to earn money. Thus, intermediaries present the advantage of allowing depositors to withdraw their deposits at any time and allowing lenders greater flexibility in loan durations. This system is termed indirect finance. Disadvantages of indirect finance include information asymmetry, inflexibility, inability of lenders and borrowers to influence interest rates, and interest rates not accurately reflecting market forces of supply (lenders) and demand (borrowers). In addition, indirect finance may be unavailable to borrowers with credit issues.

Informal lending arrangements have arisen independently around the world to solve some of the basic issues surrounding indirect finance. One form of informal "institution" is the Rotating Savings and Credit Associations ("ROSCAs"). ROSCAs have appeared in South America, Africa, and Asia, with some ROSCAs possibly appearing as early as 200 B.C.E. in China. Anyplace that there is a lack of formal financial structure, or a financial structure unwilling or unable to lend to certain groups of people, gives rise to ROSCAs. In a ROSCA, a group of individuals, for example from 10 to 300 people, meet and contribute a set amount of money repeatedly over a fixed number of time terms, with individuals taking turns taking home the contributions. Thus, if 10 people each agree to contribute $100 each month for 10 months, then each month one person would take $1,000.

Each ROSCA determines the order in which contributors take home the pot. In random ROSCAs, the participants take the pot based on a random drawing. In bidding ROSCAs each person who has not yet won the pot will bid on the pot. The bidding takes the form of each participant bidding an amount of money that the others will not have to contribute that month, with the bid winner being the participant who bids the largest amount of money. After winning a bidding ROSCA, the winner is generally obligated to pay the full sum for each term regarding of the winning bid for future terms. Using the example given in the previous paragraph, a bidder may, for example, win a ROSCA term by bidding $10. Thus, the winner will take home $100 from each of the previous winners and $90 from each ROSCA participant who has not yet won the ROSCA.

Traditional ROSCAs suffer from several significant disadvantages. First, each participant must have liquid capital ready to place into the pool. Second, each participant must participate in the full length of the pool and cannot exit, thus reducing liquidity. Furthermore, once the participants of a ROSCA are selected, and the ROSCA begins, non-participants cannot become participants in the ROSCA. Third, traditional ROSCAs provide a rigid funding channel with no opportunity for reinvestment and arbitrage. Fourth, there is no provision to securitize ROSCAs, nor provide for their use a collateral. Fifth, discount rates in ROSCA could be easily influenced and manipulated. Sixth, traditional ROSCAs rely heavily on trust and knowledge of the trustworthiness of individual participants, thus increasing the risk of default. Seventh, the first term of a traditional ROSCA is always given to a predetermined participant, typically the ROSCA organizer.

The rise of the Internet has reduced information costs and the problem of information assymetry, leading to the rise of enhanced finance solutions. For example, Zopa (www.zopa.com) provides for direct finance between peers. Thus lenders and borrowers are brought together without the need for a trusted intermediary. Zopa has several drawbacks. Zopa divides lenders' money into set amounts for a plurality of borrowers, but if there are an insufficient number of borrowers the transaction fails. Zopa controls all interaction between members, so there is no direct transaction between members. Borrowing and lending amounts in Zopa are limited, as are lending terms. Thus, the traditional drawbacks of direct lending are still present. Zopa provides no guarantees in the event of default. U.S. Pat. Pub. No. 2006/02210502A1 presents features similar to Zopa, and suffers from the same deficiencies.

Similarly, Prosper (www.prosper.com) also attempts direct finance, but using a "group" concept to operate through group leaders. While Prosper overcomes some deficiencies of Zopa, it still fails to provide guarantees, limits lending amounts, limits lending terms, and has geographic and group restrictions.

The present invention addresses the above problems and is directed to achieving at least one of the above stated goals.

### SUMMARY

A method for auctioning money is provided. The method includes: creating a transaction pool, where the transaction pool comprises n terms, n participants, and a contribution amount for each term; receiving a first bid from a first one of the n participants and receiving a second bid from a second one of the n participants for a selected one of the n terms in the transaction pool; determining at least one bid winner of the selected term of the transaction pool based on the first bid and the second bid; distributing a payment amount to the at least one bid winner of the selected term; and creating an auction certificate for one of the non-bid winners of the selected term.

In accordance with a further embodiment, a system for auctioning money is provided. The system comprises a memory and a processor coupled to the memory. The processor is operable to: create a transaction pool, where the transaction pool comprises n terms, n participants, and a contribution amount for each term; receive a first bid from a first one of the n participants and receive a second bid from a second one of the n participants for a selected one of the n terms in the transaction pool; determine at least one bid winner of the selected term of the transaction pool based on the n bids received; distribute a payment amount to the at least one bid winner of the selected term; and create an auction certificate for one of the non-bid winners of the selected term.

In accordance with another embodiment, a method for auctioning money is provided. The method includes: creating a transaction pool, where the transaction pool comprises n terms, n participants, and a contribution amount for each term; receiving a first bid from a first one of the n participants and receiving a second bid from a second one of the n participants for the first term in the transaction pool; determining at least one bid winner of the selected term of the transaction pool based on the first bid and the second bid; and distributing a payment amount to the at least one bid winner of the selected term.

In accordance with a further embodiment, a system for auctioning money is provided. The system comprises a memory and a processor coupled to the memory. The processor is operable to: create a transaction pool, where the transaction pool comprises n terms, n participants, and a contribution amount for each term; receive a first bid from a first one of the n participants and receive a second bid from a second one of the n participants for the first term in the transaction pool; determine at least one bid winner of the selected term of the transaction pool based on the first bid and the second bid; and distribute a payment amount to the at least one bid winner of the selected term.

The foregoing summarizes only a few aspects of the invention and is not intended to be reflective of the full scope of the invention as claimed. Additional features and advantages of the invention are set forth in the following description, may be apparent from the description, or may be learned by practicing the invention. Moreover, both the foregoing summary and the following detailed description are exemplary and explanatory and are intended to provide further explanation of the invention as claimed.

### BRIEF DESCRIPTION OF THE DRAWINGS

The accompanying drawings, which are incorporated in and constitute a part of this specification, illustrate a system consistent with the principles of the invention and, together with the description, serve to explain the principles of the invention.

Figure 1 is a flow-chart of a method of auctioning money consistent with the present invention.

Figure 2 is a flow-chart of a membership application and verification method consistent with the present invention.

Figure 3 is a flow-chart of a login method consistent with the present invention.

Figure 4 is a flow-chart of a transaction pool generation method consistent with the present invention.

Figure 5 is a flow-chart of an auctioneering method consistent with the present invention.

Figure 6 is a flow-chart of a settlement and liquidation method consistent with the present invention.

Figure 7 is a flow-chart of an auction certificate mortgage method consistent with the present invention.

Figure 8 is a flow-chart of an auction certificate bidding method consistent with the present invention.

Figure 9 is a flow-chart of an auction certificate negotiation method consistent with the present invention.

Figure 10 is a block diagram of a money auctioneering platform consistent with the present invention.

### DESCRIPTION

An auctioneering platform for auctioning money is disclosed. The auctioneering platform may provide a system for constructing a pool of money in an auction pool. A plurality of participants participate in the auction pool, with participants contributing money into the auction pool over a period of terms, where the number of terms may be equal to the number of participants. Participants may bid on the money in the pool during each term, with the highest bid receiving the money in the pool. The non bid winning participants each contribute into the pool, receiving an auction certificate.

Auction certificates may be either physical or electronic documents or records. The use of auction certificates facilitates the creation of a secondary market, where auction certificates may be, for example, transferred, negotiated, or auctioned in either physical, electronic, or virtual environments.

Bid winners contribute into the pool for each subsequent term. For each term of the pool, the bidding process is repeated, until each participant of the pool wins a bid. At that point, the pool is complete. Thus, participants may choose to be a lender or a borrower based on, for example, the participant's need for money and the auction.

Auction certificates may be settled when the non bid winners win the bid. Auction certificates are equity instruments that may be, for example, transferred, mortgaged, or auctioned. Thus, the present auctioneering platform enhances the liquidity of capital put into the auction pool.

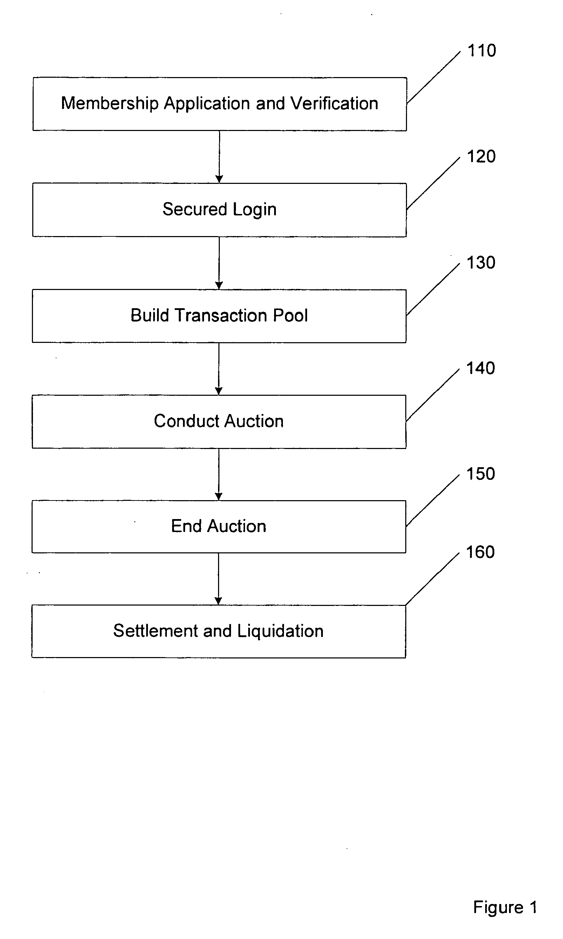

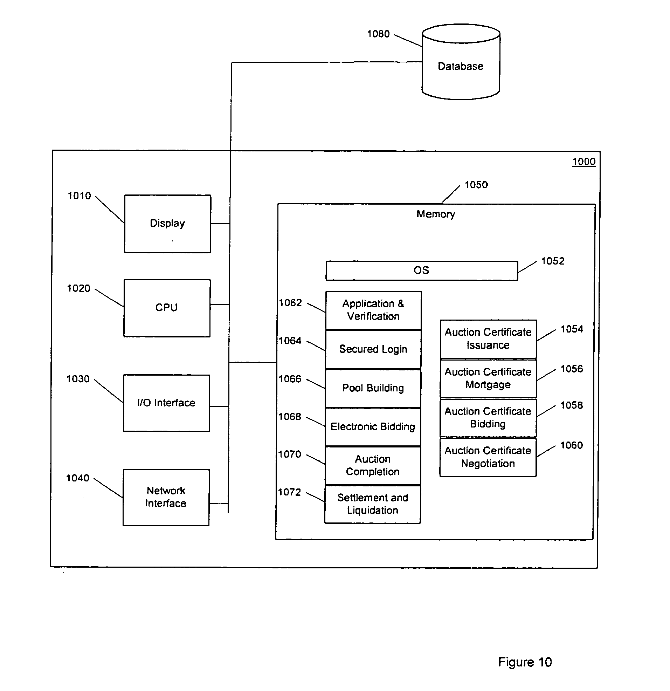

Figure 1 is a flow-chart of a method of auctioning money consistent with the present invention. Auctioneering platform 1000 (illustrated in Figure 10) may accept membership applications, verify application data, determine qualification for membership, and grant or deny membership to applicants (stage 110). Platform 1000 may provide for the secure login of members by receiving a member number and password and verifying that the password matches the member number. If so, login will be granted (stage 120).

After login, platform 1000 may build a transaction pool comprising a plurality of members. Members who belong to a transaction pool are known as participants (stage 130). The transaction pool may be for a fixed number of terms equal to the number of participants in the pool. Thus, each participant may win the pool during a single term. The transaction pool may also specify the contribution unit for each term. Once a transaction pool is generated, platform 1000 may conduct an auction of each term in the transaction pool (stage 140). Bids are received from each participant, with the highest bid winning the pool. Platform 1000 may end the auction (stage 150) and settle and liquidate the auction pool (stage 160) with the highest bidder getting the money in the auction pool for the term that he won and the non bid winners of each term receiving auction certificates.

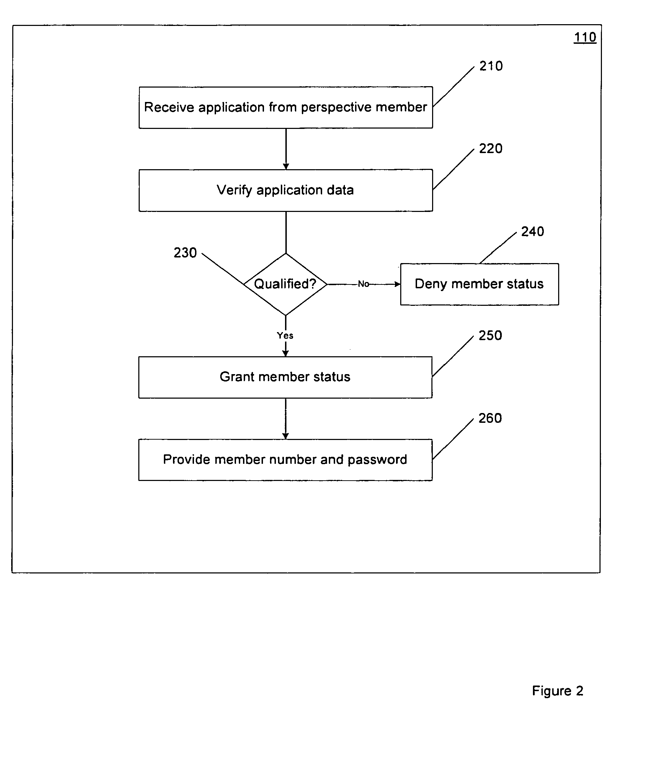

Figure 2 is a flow-chart of the membership application and verification method 110 consistent with the present invention. Platform 1000 receives an application for membership from an applicant (stage 210). Application data is verified (stage 220), and the applicant's qualification are checked (stage 230). If the applicant is not qualified, the applicant may be denied membership (stage 240). If the applicant is qualified, he may be granted member status (stage 250). Platform 1000 provides members with membership data, for example a member number and a password (stage 260).

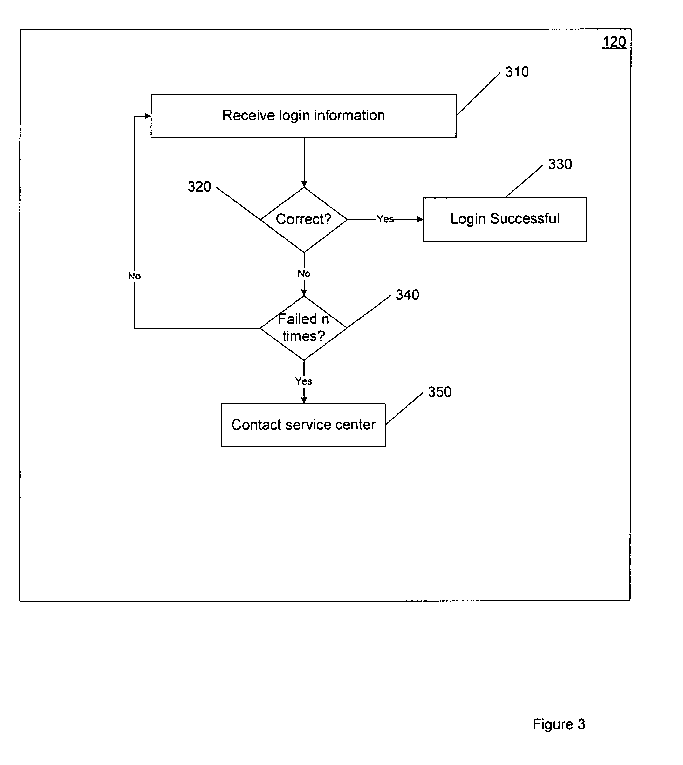

Figure 3 is a flow-chart of the login method 120 consistent with the present invention. Platform 1000 receives login information from a member, for example a member number and password (stage 310). The login information may be checked against an auction database that maintains membership data (stage 320). If the login information matches the membership data, the login is successful and the member is granted access to auctioneering platform 1000 (stage 330). If the login information is incorrect, a check is made as to how many times the login information containing the member number has failed the login check of stage 320 (stage 340). If the login fails for greater than a set number of times following the last successful login, for example 3 times, a notification is sent to the member corresponding to the member number to contact the service center (stage 350). If the login fails for a number of times less than the set number of times, the method returns to stage 310 and the user is given another opportunity to login.

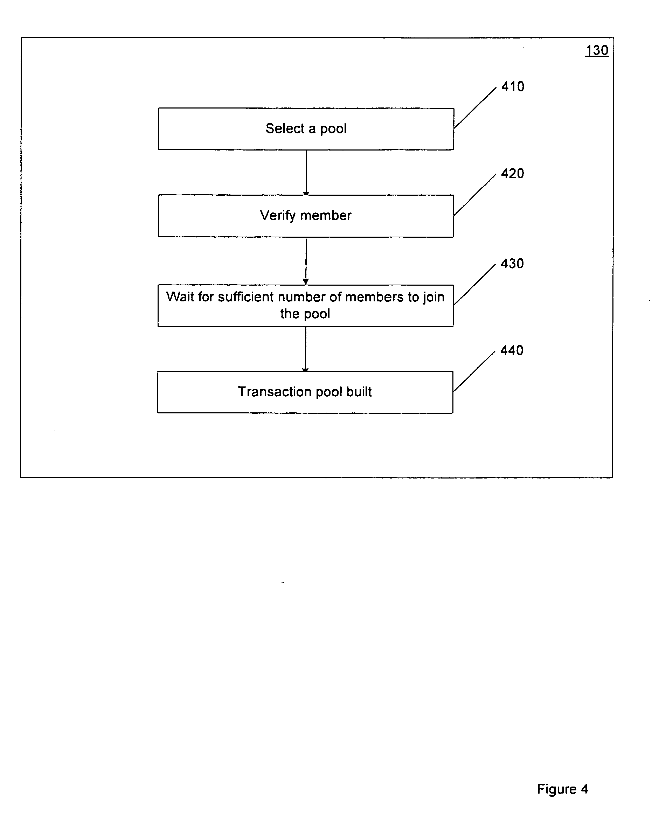

Figure 4 is a flow-chart of the transaction pool generation method 130 consistent with the present invention. A member selects a transaction pool (stage 410). The transaction pool will be for a number of terms, for example 12 months, 24 months, or 36 months. The transaction pool may also specify a unit contribution amount for each term, for example $10,000 per participant. Platform 1000 may verify that the member is qualified for the transaction pool selected (stage 420). Platform 1000 waits to build the pool until the number of members joining the transaction pool is equal to the number of terms in the pool (stage 430). Once the number of members in the pool equal the number of terms in the pool, the transaction pool may be built and members become participants in the pool (stage 440).

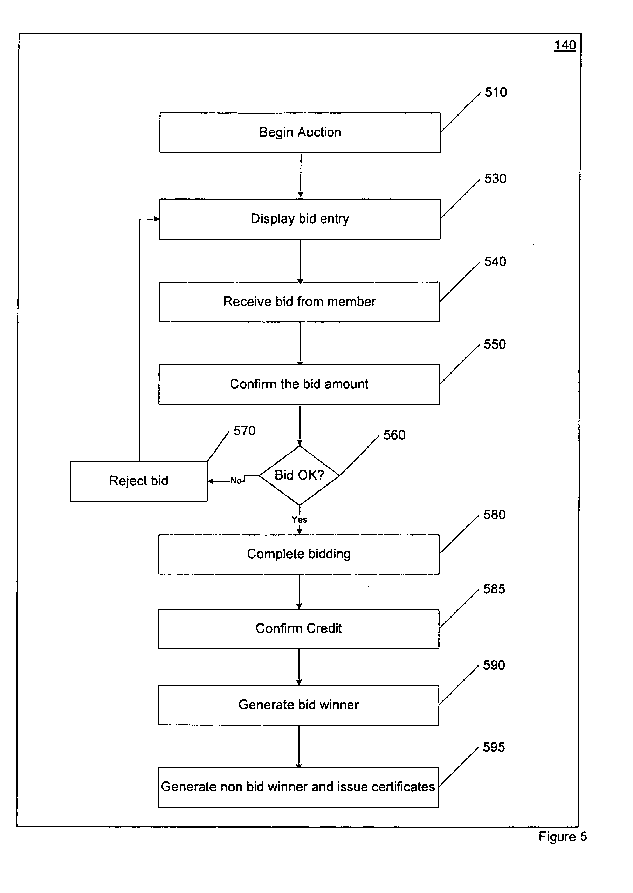

Figure 5 is a flow-chart of the auctioneering method 140 consistent with the present invention. Consistent with the present invention, bidding may be performed on a term by term basis, around the time of each term. For example, if the auction is for a 24 term auction with 24 participants, and each term is one month, auctioneering method 140 may occur on a monthly basis for the auction certificate for that month or the upcoming month. Thus, each term auctioneering method 140 may be performed for each auction pool. Unlike a traditional ROSCA which does not permit bidding on the first term (generally the ROSCA organizer "wins" the first term), consistent with the present invention auctioneering platform 1000 may permit bidding by the participants on the first term.

Platform 1000 begins the auction of a transaction pool after the transaction pool is built (stage 510). Participants then enter the auction for the transaction pool. Participants may be presented with a form or table into which bids are displayed and they may enter their bids for each term (stages 530 and 540). Platform 1000 receives bids from the participants (stage 540) and confirms the bid amount with the bidding participant (stage 550). Platform 1000 examines the bid (stage 560). If the bid is greater than a set upper alert amount, the bid may be rejected, and if the bid is over a time limit, the bid may also be rejected (stage 570). Additionally, the bid may be checked against a set lower alert amount and may be rejected if the bid is below the set lower alert amount. (stage 570). The participant may be given an opportunity to reenter the bid if the bid is greater than the set alert amount but not above the time limit at stage 530. If the bid is valid, the bidding process completes (stage 580).

At the completion of the bidding process, one or more participants may be candidate winners. A candidate winner may be selected, for example, based on the participant, or participants, who had the highest bid. A credit check may be conducted on the candidate winners, and if the bid (the amount that the candidate winner would receive by winning the auction) is greater than the amount of credit available to the candidate winner then the bid from the candidate winner may be rejected and other candidate winners selected (stage 585). The credit check may determine if the credit available to the candidate winner is greater than the amount that the candidate winner would receive by winning the auction. The amount received may be calculated as shown in the paragraph below. Following approval of credit, platform 1000 selects one or more candidate winners as one or more bid winners. (stage 590). Non-bid winners are notified and each provided with an auction certificate (stage 595).

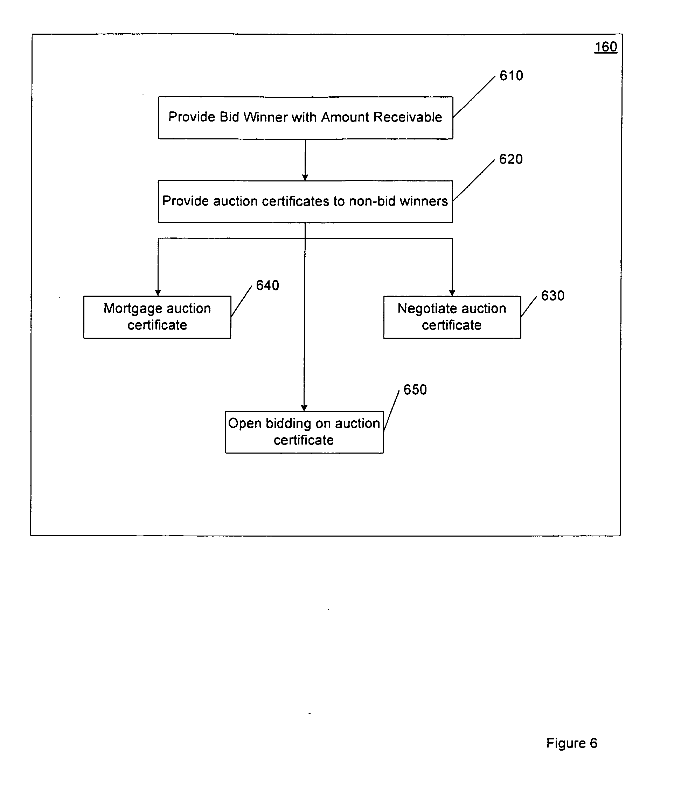

Figure 6 is a flow-chart of the settlement and liquidation method consistent with the present invention. Platform 1000 receives payment from the non bid winners into a settlement account and remits the amount in the settlement account to the bid winner (stage 610). The amount received by the bid winner may be determined by the following formula: An = (U-ln)(n-i)+U(i-1), where An is the payment amount to the bid winner of the selected term; U is the contribution amount; n is the number of terms; i is the number of the selected term; and In is the amount of the bid from the bid winner.

For example, in a pool of 24 terms with a deposit of $10,000 per term, there will be 24 participants. If participant A bids $1,000 and wins term 6, participant A would receive An=(10,000-1,000)x(24-6)+10,000(6-1)=$212,000. By term 6, the non-bid winners in the pool would pay $9,000 and the past bid winners of the pool would pay $10,000.

Platform 1000 provides an auction certificate to each of the non-bid winners (stage 620). After reading this specification, those skilled in the art will appreciate that there are multiple ways to handle settlement. For example, the bid winner could receive payment prior to collection from the non-bid winners. Or, the non-bid winners could initially contribute prior to paying the bid winner. Or, the collection and remittance could occur essentially simultaneously. For non bid winners who fail to make payment, platform 1000 could press the delinquent non bid winners. For example, the right to participate in other pools could be withheld.

To enhance liquidity, the fixed duration and participants may be enhanced by using the auction certificates as equity instruments. Thus, the auction certificates can be mortgaged (stage 640), auctioned (stage 650), or negotiated (stage 630).

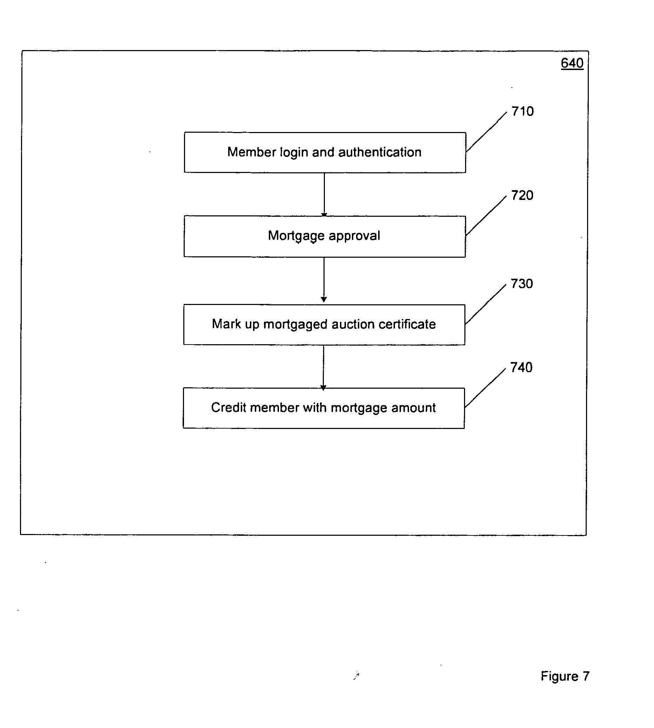

Figure 7 is a flow-chart of the auction certificate mortgage method 640 consistent with the present invention. Platform 1000 accepts a member login and authenticates the member (stage 710). The platform may approve the mortgage of the auction certificate (stage 720) and mark up the auction certificate for mortgage (stage 730). Following mark up, platform 1000 may credit the mortgaging member of the auction certificate with the mortgage amount. Thus, physical, electronic, or virtual mortgaging enhances the liquidity of the auction certificate.

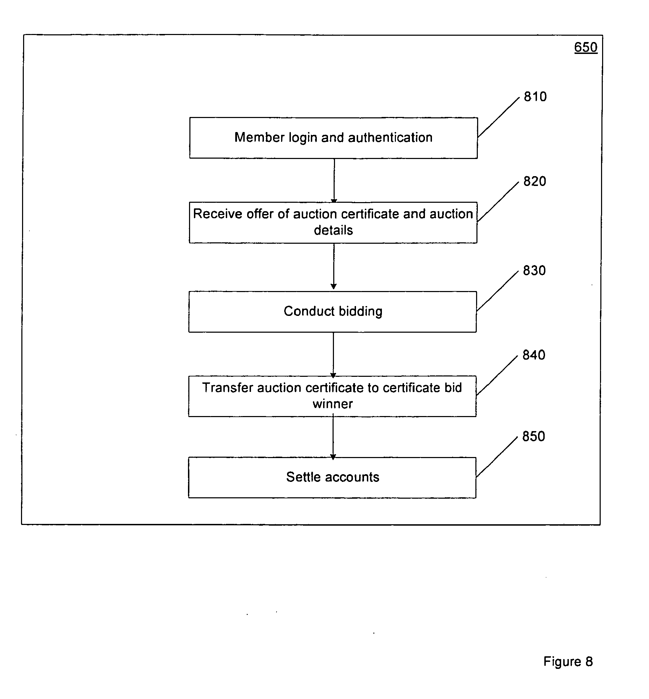

Figure 8 is a flow-chart of the auction certificate bidding method 650 consistent with the present invention. Platform 1000 receives login information from a member and authenticates the member (stage 810). Auction certificate and details are received (stage 820). For example, the member may specify an opening bid and a time duration for the auction. Similarly, the member may place a reserve price on the auction certificate. Those skilled in the art will now appreciate the variety of auction techniques that may be applied to the auction certificate. Members may bid on the auction certificate (stage 830), with the auction certificate winner receiving the auction certificate (stage 840) and the winner remitting the price of the auction certificate into a settlement account for transfer to the original auction certificate holder (stage 850).

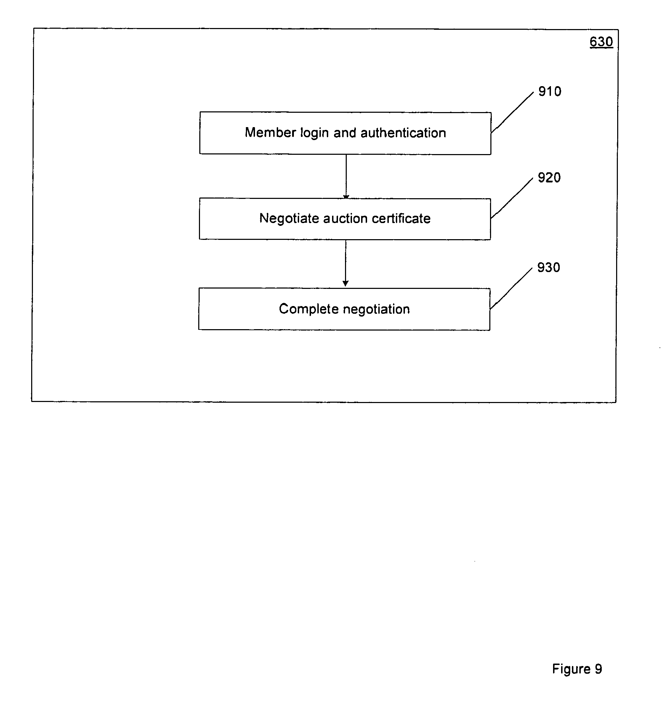

Figure 9 is a flow-chart of the auction certificate negotiation method 630 consistent with the present invention. For conveyance of an auction certificate between members, platform 1000 receives login information from the parties to the transaction and verifies the login information (stage 910). The auction certificate is conveyed by platform 1000 at the price negotiated by the parties (stage 920) and the conveyance is completed by platform 1000 (stage 930).

Figure 10 is a block diagram of the money auctioneering platform 1000 consistent with the present invention. As illustrated in Figure 4, a system environment of auctioneering platform 1000 may include a display 1010, a central processing unit 1020, an input/output interface 1030, a network interface 1040, and memory 1050 coupled together by a bus. Auctioneering platform 1000 may be adapted to include the functionality and computing capabilities to auction money to a plurality of users over a network.

As shown in Figure 10, auctioneering platform 1000 may comprise a PC or mainframe computer for performing various functions and operations consistent with the invention. Auctioneering platform 1000 may be implemented, for example, by a general purpose computer selectively activated or reconfigured by a computer program stored in the computer, or may be a specially constructed computing platform for carrying-out the features and operations of the present invention. Auctioneering platform 1000 may also be implemented or provided with a wide variety of components or subsystems including, for example, at least one of the following: at least one central processing units 1020, a co-processor, memory 1050, registers, and other data processing devices and subsystems.

Auctioneering platform 1000 may also communicate or transfer bids, auction data, auction results, and auction certificates via I/O interface 1030 and/or network interface 1040 through the use of direct connections or communication links to other elements of the present invention or to auction members at their respective remote communications platforms. For example, a firewall in network interface 1040, prevents access to the platform by unauthorized outside sources.

Alternatively, communication within auctioneering platform 1000 may be achieved through the use of a network architecture (not shown). In an alternative embodiment (not shown), the network architecture may comprise, alone or in any suitable combination, a telephone-based network (such as a PBX or POTS), a local area network (LAN), a wide area network (WAN), a dedicated intranet, and/or the Internet. Further, it may comprise any suitable combination of wired and/or wireless components and systems. By using dedicated communication links or shared network architecture, auctioneering platform 1000 may be located in the same location or at a geographically distant location from auction database 1080.

I/O interface 1030 of the system environment shown in Figure 10 may be implemented with a wide variety of devices to receive and/or provide the data to and from auctioneering platform 1000. I/O interface 1030 may include an input device, a storage device, and/or a network. The input device may include a keyboard, a microphone, a mouse, a disk drive, video camera, magnetic card reader, or any other suitable input device for providing data to auctioneering platform 1000.

Network interface 1040 may be connected to a network, such as a Wide Area Network, a Local Area Network, or the Internet for providing read/write access to data in auction database 1080. Furthermore, network interface 1040 may serve as a web interface or gateway to one or more auction members operating a remote computing platform, such as a personal computer, web terminal, or mobile phone or personal digital assistant. Network interface 1040 may thus provide web access to auctioneering platform 1000.

Memory 1050 may be implemented with various forms of memory or storage devices, such as read-only memory (ROM) devices and random access memory (RAM) devices. Memory 1050 may also include a memory tape or disk drive for reading and providing records on a storage tape or disk as input to patent flow platform 1000. Memory 1050 may comprise computer instructions forming a plurality of modules. The modules may include an on-line auctioneering transaction module (not shown) comprising one or more of: an application and verification module 1062; a secured login module 1064; a pool building module 1066; an electronic bidding module 1068; an auction completion module 1070; and a settlement and liquidation module 1072.

Application and verification module 1062 may determine membership qualification based on verification information, and may also provide and maintain a member number and password for each respective member. Secured login module 1064 may accept member numbers and passwords, verify that the member number and password is valid, and permit entry into auctioneering platform 1000 based on the results of the verification. In addition, secured login module 1064 may bar access to auctioneering platform 1000 for members who enter an incorrect password a preset number of times, for example 3 times. After the barring, secured login module 1064 may notify the member to contact a system administrator.

Pool building module 1066 may build transaction pools with various terms, for example, 12, 24, and 36 terms, for qualified members. Once a sufficient number of members join the pool, the pool may be built. Electronic bidding module 1068 controls bidding on built transaction pools. Electronic bidding module 1068 may display a bidding entry form, such as a bidding column, for each member to enter a bid into the entry form. Electronic bidding module 1068 may verify that the bid is below a maximum amount and, if so, accept the bid.

Auction completion module 1070 may examine, judge, and compare the amount of each bid at the end of bidding. Auction completion module 1070 may determine the maximum effective amount from among the bids as the winning bid. Settlement and liquidation module 1072 may collect the amount payable from the accounts, either virtual or physical, of the non bid winners. If payment is not collected before a deadline, settlement and liquidation module 1072 may make advances for the amounts due and press the non bid winners who failed to pay for collection. Settlement and liquidation module may collect the payments into a settlement account and disburse the settlement account to the bid winner.

Memory 1050 may also comprise an auction certificate transaction module (not shown) comprising one or more of: an auction certificate issuance module 1054; an auction certificate mortgage module 1056; and auction certificate bidding module 1058; and an auction certificate negotiation module 1060. Auction certificate issuance module 1054 may convert the amount receivable from non bid winners to one or more auction certificates. Auction certificate mortgage module 1056 may provide auction certificate mortgage functions and report mortgage results. Auction certificate bidding module 1058 may auction auction certificates to other members. Auction certificate bidding module 1058 may receive a minimum bid and duration from the auction certificate holder, display bids, determine the winner, and track the results of the auction. Further, auction certificate bidding module 1058 may transfer the payment for the auction certificate and the auction certificate between the winner and the auctioning member. Auction certificate negotiation module 1060 may assist member negotiation of auction certificates.

Auction database 1080 is coupled to auctioneering platform 1000. Auction database 1080 may include member registration data, member verification data, transaction pool data, electronic bids and results data, member virtual account data, and other data relevant to the functioning of the auctioneering platform 1000. Auction database 1080 may be electronic memory, magnetic memory, optical memory, or a combination thereof, for example, SDRAM, DDRAM, RAMBUS RAM, ROM, Flash memory, hard drives, floppy drives, optical storage drives, or tape drives. Auction database 1080 may comprise a single device, multiple devices, or multiple devices of multiple device types, for example, a combination of ROM and a hard drive.

Those skilled in the art will appreciate that all or part of systems and methods consistent with the present invention may be stored on or read from other computer-readable media, such as: secondary storage devices, like hard disks, floppy disks, flash storages, CD, or DVD; a carrier wave received from the Internet; or other forms of computer-readable memory, such as read-only memory (ROM), random-access memory (RAM), or magnetic RAM.

Furthermore, one skilled in the art will also realize that the processes illustrated in this description may be implemented in a variety of ways and include multiple other modules, programs, applications, scripts, processes, threads, or code sections that all functionally interrelate with each other to accomplish the individual tasks described above for each module, script, and daemon. For example, it is contemplated that these programs modules may be implemented using commercially available software tools, using custom object-oriented, using applets written in the Java programming language, or may be implemented as with discrete electrical components or as at least one hardwired application specific integrated circuits (ASIC) custom designed just for this purpose.

It will be readily apparent to those skilled in this art that various changes and modifications of an obvious nature may be made, and all such changes and modifications are considered to fall within the scope of the appended claims. Other embodiments of the invention will be apparent to those skilled in the art from consideration of the specification and practice of the invention disclosed herein. It is intended that the specification and examples be considered as exemplary only, with a true scope and spirit of the invention being indicated by the following claims and their equivalents.

## Claims

1. A method for auctioning money, the method comprising:
creating a transaction pool, where the transaction pool comprises n terms, n participants, and a contribution amount for each term;
receiving a first bid from a first one of the n participants and receiving a second bid from a second one of the n participants for a selected one of the n terms in the transaction pool;
determining at least one bid winner of the selected term of the transaction pool based on the first bid and the second bid;
distributing a payment amount to the at least one bid winner of the selected term; and
creating an auction certificate for one of the non-bid winners of the selected term.

2. The method of claim 1, further comprising collecting a receivable amount from the one of the non-bid winners.

3. The method of claim 2 wherein the receivable amount is the contribution amount less an amount of the bid from the at least one bid winner.

4. The method of claim 2, further comprising pressing the non-bid winner for payment where the non-bid winner fails to provide the contribution.

5. The method of claim 1 wherein the payment amount to the at least one bid winner is An = (U-ln)(n-i)+U(i-1), where An is the payment amount to the at least one bid winner of the selected term; U is the contribution amount; n is the number of terms; i is the selected term; and In is the amount of the bid from the at least one bid winner.

6. The method of claim 1, further comprising:
receiving a request to mortgage the auction certificate from the non-bid winner; approving the mortgage of the auction certificate for a mortgage amount; and
distributing the mortgage amount to the non-bid winner.

7. The method of claim 1, further comprising:
receiving a request to auction the auction certificate from the non-bid winner; and
auctioning the auction certificate.

8. The method of claim 7, further comprising:
receiving an auction payment from an auction certificate winner of the auction for the auction certificate;
transferring the auction certificate to the auction certificate winner; and
transferring the received auction payment to the non-bid winner.

9. The method of claim 1, further comprising:
receiving a request to negotiate an auction certificate among two or more members, where one member includes the non-bid winner who owns the auction certificate;
receiving a negotiation price for the auction certificate from at least one of the two or more members; and
transferring the auction certificate from the non-bid winner who owns the auction certificate to at least one of the two or more members.

10. The method of claim 1, further comprising qualifying the n participants prior to each respective participant being admitted to the transaction pool.

11. The method of claim 1, further comprising:
creating a second transaction pool, where the second transaction pool comprises m terms, m participants, and a second contribution amount for each term, and wherein a joint participant is a participant of both the first transaction pool and the second transaction pool.

12. The method of claim 11, further comprising:
receiving login information from the joint participant; and
receiving a request from the joint participant to bid on either the first transaction pool or the second transaction pool.

13. A system for auctioning money, comprising:
a memory;
a processor coupled to the memory, the processor operable to:
create a transaction pool, where the transaction pool comprises n terms, n participants, and a contribution amount for each term;
receive a first bid from a first one of the n participants and receive a second bid from a second one of the n participants for a selected one of the n terms in the transaction pool;
determine at least one bid winner of the selected term of the transaction pool based on the first bid and the second bid;
distribute a payment amount to the at least one bid winner of the selected term; and
create an auction certificate for one of the non-bid winners of the selected term.

14. The system of claim 13, wherein the processor is further operable to collect a receivable amount from the one of the non-bid winners.

15. The system of claim 14 wherein the receivable amount is the contribution amount less an amount of the bid from the at least one bid winner.

16. The system of claim 14, wherein the processor is further operable to press the non-bid winner for payment where the non-bid winner fails to provide the contribution.

17. The system of claim 13 wherein the payment amount to the at least one bid winner is An = (U-ln)(n-i)+U(i-1), where An is the payment amount to the at least one bid winner of the selected term; U is the contribution amount; n is the number of terms; i is the number of the selected term; and In is the amount of the bid from the at least one bid winner.

18. The system of claim 13, wherein the processor is further operable to:
receive a request to mortgage the auction certificate from the non-bid winner;
approve the mortgage of the auction certificate for a mortgage amount; and distribute the mortgage amount to the non-bid winner.

19. The system of claim 13, wherein the processor is further operable to:
receive a request to auction the auction certificate from the non-bid winner; and auction the auction certificate.

20. The system of claim 19, wherein the processor is further operable to:
receive an auction payment from an auction certificate winner of the auction for the auction certificate;
transfer the auction certificate to the auction certificate winner; and
transfer the received auction payment to the non-bid winner.

21. The system of claim 13, wherein the processor is further operable to:
receive a request to negotiate an auction certificate among two or more members, where one member includes the non-bid winner who owns the auction certificate;
receive a negotiation price for the auction certificate from at least one of the two or more members; and
transfer the auction certificate from the non-bid winner who owns the auction certificate to at least one of the two or more members.

22. The system of claim 13, wherein the processor is further operable to qualify the n participants prior to each respective participant being admitted to the transaction pool.

23. The system of claim 13, wherein the processor is further operable to:
create a second transaction pool, where the second transaction pool comprises m terms, m participants, and a second contribution amount for each term, and wherein a joint participant is a participant of both the first transaction pool and the second transaction pool.

24. The system of claim 23, wherein the processor is further operable to:
receive login information from the joint participant; and
receive a request from the joint participant to bid on either the first transaction pool or the second transaction pool.
